# EUROPÄISCHE PATENTSCHRIFT

(11) **EP 2 063 672 B1**
(45) Veröffentlichungstag und Bekanntmachung des Hinweises auf die Patenterteilung: **22.05.2019**
(21) Anmeldenummer: 07022828.3
(22) Anmeldetag: 24.11.2007
(51) Int. Cl.: H04W 36/02, H04L 29/12

(54) **Verfahren zur Datenübertragung zwischen einem Netzwerk und einer mobilen Datenübertragungseinheit**
Method for transmitting data between a network and a mobile data transmission unit
Procédé destiné à la transmission de données entre un réseau et une unité de transmission des données mobile

(43) Veröffentlichungstag der Anmeldung: 27.05.2009
(73) Patentinhaber: SEW-EURODRIVE GmbH & Co. KG, 76646 Bruchsal (DE)
(72) Erfinder: Speidel, Thomas, 71706 Markgröningen (DE); Plewan, Michael, 70176 Stuttgart (DE); Pfendtner, Steffen, 71394 Kernen I.R (DE)

(56) Entgegenhaltungen:
- EP-A- 1 349 322
- WO-A-2007/015574
- US-A1- 2004 151 136
- US-A1- 2005 176 432
- US-A1- 2005 276 240
- BRIK V ET AL: "Eliminating handoff latencies in 802.11 WLANs using Multiple Radios: Applications, Experience and Evaluation" INTERNET CITATION, [Online] XP002355286 Gefunden im Internet: URL:http://www.imconf.net/imc-2005/papers/ imc05efiles/brik/brik.pdf> [gefunden am 2005-11-21]

## Beschreibung

Die Erfindung betrifft ein Verfahren zur Datenübertragung zwischen einem Netzwerk und einer mobilen Datenübertragungseinheit der im Oberbegriff des Anspruchs 1 angegebenen Gattung.

Aus der EP 1 578 059 A1 ist eine Datenübertragungseinrichtung bekannt, die mehrere lokale Netzwerke und eine mobile Datenübertragungseinheit umfasst.

Bewegt sich die mobile Datenübertragungseinheit vom Bereich eines ersten Zugriffspunkts in den Bereich eines zweiten Zugriffspunkts, wird bei bekannten Datenübertragungseinheiten zunächst die Verbindung zum ersten Zugriffspunkt unterbrochen und anschließend mit dem zweiten, näher liegenden Zugriffspunkt eine Verbindung aufgebaut. Für die Zeitspanne, während der die Verbindung zum zweiten Zugriffspunkt aufgebaut wird, besteht keine Verbindung zum Netzwerk. Während dieser Zeitspanne zu übertragende Nutzdaten müssen zwischengespeichert werden. Insbesondere für industrielle Anwendungen ist die benötigte Dauer für den Aufbau einer Verbindung zum zweiten Zugriffspunkt, während der keine Verbindung zu dem lokalen Netzwerk besteht, und die damit verbundene Verzögerung im Datenverkehr nicht akzeptabel.

Aus der WO 02/073430 A2 ist ein Verfahren bekannt, mit dem zwei Module, die nach unterschiedlichen Standards Daten übertragen, betrieben werden können. Um eine gegenseitige Störung der Module zu vermeiden, ist vorgesehen, dass die Daten über die Module intermittierend übertragen werden. Dabei wird zur Datenübertragung zwischen den Modulen umgeschaltet. Dabei werden jedoch über die beiden Module unterschiedliche Nutzdaten übertragen, die von unterschiedlichen Treibern bereitgestellt werden. Jede Verbindung wird unterbrochen, während die andere Verbindung aktiv ist, so dass die zu übertragenden Daten jeweils zwischengespeichert werden müssen und sich Unterbrechungen im Datenstrom ergeben.

Die EP 1 349 322 A1 offenbart ein Verfahren zum "Seamless Roaming", bei dem beim Wechsel zwischen gleichen oder unterschiedlichen Verbindungstechnologien eine Verbindung aufrechterhalten werden kann. Hierzu wird die Zuordnung von MAC-Adresse und IP-Adresse verändert. Die MAC-Andresse der neuen Verbindung wird der IP-Adresse der alten Verbindung zugewiesen. Hierzu wird eine Aktualisierungsmitteilung als Erweiterung des "Address Resolution Protocol (ARP)" versandt.

Die US 2004/0151136 A1 offenbart ein Verfahren, bei dem über eine zweite Verbindungstechnologie eine Verbindung aufgebaut wird, und dann erst die erste Verbindung unterbrochen wird. Von dem mobilen Teilnehmer wird eine Aktualisierungsmitteilung versandt.

Der Erfindung liegt die Aufgabe zugrunde, ein Verfahren zur Datenübertragung zwischen einem Netzwerk und einer mobilen Datenübertragungseinheit anzugeben, mit dem sich eine Unterbrechung der Datenverbindung der Datenübertragungseinheit zu dem Netzwerk vermeiden lässt.

Diese Aufgabe wird durch ein Verfahren mit den Merkmalen des Anspruchs 1 gelöst.

Die Umschalteinrichtung stellt sicher, dass jeweils nur über eines der Module Nutzdaten übertragen werden. Nach dem Umschaltvorgang muss jedoch sichergestellt werden, dass Daten, die an die mobile Datenübertragungseinheit gesendet werden, von der Datenübertragungseinheit empfangen werden können. Hierzu ist vorgesehen, dass das aktiv geschaltete Modul eine Aktualisierungsmitteilung versendet. Diese Aktualisierungsmitteilung bewirkt, dass Daten, die an das bisher aktive, nun passive Modul gesendet wurden, ab Empfang der Aktualisierungsmitteilung in dem Netzwerk an das jetzt aktive Modul gesendet werden und nicht mehr an das nun passive Modul. Die Aktualisierungsmitteilung führt im Netzwerk automatisch zu einer Aktualisierung der entsprechenden Tabellen. In dem Netzwerk selbst müssen keine Maßnahmen beim Umschalten getroffen werden. Das Netzwerk benötigt keinen speziellen Aufbau oder spezielle Software. Dadurch ist eine einfache Integration in bestehende Netzwerke möglich.

Vorteilhaft wird die Aktualisierungsmitteilung als Broadcast-Mitteilung an alle Empfänger versendet. Dadurch ist sichergestellt, dass alle Teilnehmer in dem Netzwerk, die mit Datenverarbeitungseinheiten der mobilen Datenübertragungseinheit kommunizieren, diese Daten nun an die richtige Adresse senden.

Es ist vorgesehen, dass über das jeweils aktive Modul Nutzdaten von allen mit der Umschalteinrichtung verbundenen, aktiven Datenverarbeitungseinheiten versendet werden und Nutzdaten für alle mit der Umschalteinrichtung verbundenen aktiven Datenverarbeitungseinheiten empfangen werden. Der gesamte Datenverkehr mit der mobilen Datenübertragungseinheit wird zu jedem Zeitpunkt nur über ein aktives Modul ausgeführt. Dabei können von diesem Modul alle Nutzdaten übertragen werden. Die Module sind nicht nur zur Übertragung von Daten von einigen Datenverarbeitungseinheiten, beispielsweise zur Übertragung von Daten in einem bestimmten Format oder nach einem bestimmten, für jedes Modul unterschiedlichen Standard, geeignet.

Es ist vorgesehen, dass jede Datenverarbeitungseinheit des Netzwerks, jeder Zugriffspunkt, jedes Modul und jede Datenverarbeitungseinheit der Datenübertragungseinheit eine eigene Adresse, insbesondere eine eigene MAC-Adresse besitzt. Dadurch kann jede Datenverarbeitungseinheit, jeder Zugriffspunkt und jedes Modul selbst adressiert werden. Beim Übertragen von Nutzdaten zwischen den Datenverarbeitungseinheiten der Datenübertragungseinheit und den Modulen und beim Übertragen von Nutzdaten zwischen den Datenverarbeitungseinheiten des Netzwerks und den Zugriffspunkten wird vorteilhaft den zu übertragenden Datenpaketen jeweils die MAC-Adresse der Quelle und des Ziels der Daten vorangestellt. Vorteilhaft sind die Module mit den Zugriffspunkten über eine kabellose Verbindung verbunden, wobei beim Übertragen von Nutzdaten zwischen den Modulen und den Zugriffspunkten den Datenpaketen zusätzlich zu den MAC-Adressen der Quelle und des Ziels der Daten die MAC-Adressen des Moduls und des Zugriffspunkts, über die die Daten übertragen werden, als Sender bzw. Empfänger vorangestellt werden. Dadurch ist sichergestellt, dass die Daten in dem kabellosen Netzwerk korrekt übertragen werden können.

Die Aktualisierungsmitteilung enthält als Quelle die MAC-Adresse mindestens einer Datenverarbeitungseinheit der Datenübertragungseinheit anstatt der MAC-Adresse des Moduls. Üblicherweise werden Aktualisierungsmitteilungen mit der Adresse des Teilnehmers, der die Aktualisierungsmitteilung versendet, versandt. Dies kann beispielsweise vorgesehen sein, wenn ein neuer Teilnehmer in einem Netzwerk angeschlossen wird. Dadurch, dass das Modul nicht seine eigene MAC-Adresse angibt, sondern die MAC-Adresse einer Datenverarbeitungseinheit der Datenübertragungseinheit, ist in dem Netzwerk bekannt, über welchen Zugriffspunkt, nämlich den mit dem aktiven Modul verbundenen Zugriffspunkt, Daten der Datenverarbeitungseinheit der Datenübertragungseinheit nun empfangen werden. Da die MAC-Adresse des Moduls in dem Netzwerk selbst nur an dem Zugriffspunkt bekannt sein muss, zu dem jeweils eine Verbindung besteht, ist die MAC-Adresse des Moduls in dem Netzwerk ohne Bedeutung. Dadurch kann die mobile Datenübertragungseinheit bei einem bestehenden Netzwerk eingesetzt werden, ohne dass das Netzwerk zusätzliche Informationen, beispielsweise über die MAC-Adressen der Module und der ihnen zugeordneten Datenverarbeitungseinheiten der Datenübertragungseinheit, benötigt.

Vorteilhaft ist in der Umschalteinrichtung gespeichert, welche Datenverarbeitungseinheiten der Datenübertragungseinheit aktiv sind. Nach dem Umschalten versendet das aktiv geschaltete Modul vorteilhaft eine Aktualisierungsmitteilung für jede als aktiv gespeicherte Datenverarbeitungseinheit der Datenübertragungseinheit. Dadurch wird in dem Netzwerk gespeichert, dass die an alle Datenverarbeitungseinheiten der Datenübertragungseinheit zu sendenden Daten über den Zugriffspunkt zu senden sind, der mit dem nun aktiven Modul verbunden ist.

Um sicherzustellen, dass zu jedem Zeitpunkt die bestmögliche Verbindung aktiv ist, ist vorgesehen, dass das mindestens eine passive Modul während der Verbindung des aktiven Moduls mit dem Zugriffspunkt nach weiteren Zugriffspunkten sucht und eine Standby-Datenverbindung zu einem weiteren Zugriffspunkt herstellt. Dabei ist insbesondere vorgesehen, dass das passive Modul eine Standby-Datenverbindung zu dem Zugriffspunkt herstellt, der die beste Signalstärke liefert. Nach Herstellung einer Standby-Datenverbindung ist vorgesehen, dass das passive Modul weiter nach weiteren Zugriffspunkten sucht, die möglicherweise eine bessere Signalstärke liefern. Zweckmäßig stellt das Modul die Standby-Datenverbindung zu dem,Zugriffspunkt unter seiner eigenen MAC-Adresse her. Dadurch sind alle Module mit unterschiedlichen MAC-Adressen in dem Netzwerk angemeldet, so dass sich keine Störungen ergeben. Vorteilhaft wird nach der Herstellung der Standby-Datenverbindung die Qualität dieser Verbindung geprüft und mit der Qualität der aktiven kabellosen Datenverbindung verglichen. Es ist vorgesehen, dass die Umschalteinrichtung zwischen dem Modul, das die Standby-Datenverbindung zu einem weiteren Zugriffspunkt hergestellt hat, und dem aktiven Modul umschaltet, wenn die Qualität der Standby-Datenverbindung besser als die Qualität der aktiven Verbindung ist, so dass das bisher aktive Modul passiv geschaltet wird und das bisher passive Modul aktiv. Dadurch ist sichergestellt, dass zu jedem Zeitpunkt die beste verfügbare Verbindung genutzt wird.

Vorteilhaft stellen alle Module über die gleiche kabellose Verbindungstechnologie eine kabellose Verbindung zu den Zugriffspunkten her. Alle Module nutzen demnach den gleichen Standard zu Übertragung von Daten. Vorteilhaft sind die Module WLAN-Module (Wireless Local Area Network-Module), die mit den Zugriffspunkten über ein kabelloses verteiltes System, ein so genanntes WDS (Wireless Distribution System) verbunden sind. Die Umschalteinrichtung ist mit den Datenverarbeitungseinheiten der Datenübertragungseinheit vorteilhaft über Ethernetverbindungen verbunden. Es kann jedoch auch vorgesehen sein, dass die Umschalteinrichtung mit den Datenverarbeitungseinheiten über weitere kabellose Verbindungen, beispielsweise über WLAN-Verbindungen verbunden ist. Auch andere Verbindungen können zweckmäßig sein.

Es ist vorgesehen, dass die Nutzdaten zwischen Datenverarbeitungseinheiten der Datenübertragungseinheit und der Umschalteinrichtung und zwischen den Zugriffspunkten und den Datenverarbeitungseinheiten des Netzwerks jeweils über ein Schaltbauteil, einen so genannten Switch, übertragen werden. In dem Switch ist vorteilhaft in einer Tabelle gespeichert, welches Ziel über welche Verbindung zu erreichen ist. Der Switch ist mit allen Datenverarbeitungseinheiten und der Umschalteinrichtung bzw. allen Zugriffspunkten verbunden und leitet die Datenpakete in Abhängigkeit der angegebenen Adresse zum jeweils richtigen Ausgang weiter. Es ist vorgesehen, dass die Tabelle des Switch, der mit den Zugriffspunkten verbunden ist, nach dem Erhalten der Aktualisierungsmitteilung aktualisiert wird. Dadurch ist sicherstellt, dass Datenpakete, die bisher an den Zugriffspunkt gesendet wurden, der mit dem nun passiven Modul verbunden ist, nun an den Zugriffspunkt gesendet werden, der mit dem aktiven Modul verbunden ist. Dadurch ist auf einfache Weise ein störungsfreier Datenverkehr zwischen dem Netzwerk und der mobilen Datenübertragungseinheit ermöglicht.

Ein Ausführungsbeispiel wird im Folgenden anhand der Zeichnung erläutert. Es zeigen:
- Fig. 1: eine schematische Darstellung des Aufbaus des Netzwerks und der mobilen Datenübertragungseinheit,
- Figuren 2 bis 4: schematische Darstellungen des Ablaufs des Verfahrens zur Datenübertragung zwischen dem Netzwerk und der mobilen Datenübertragungseinheit.

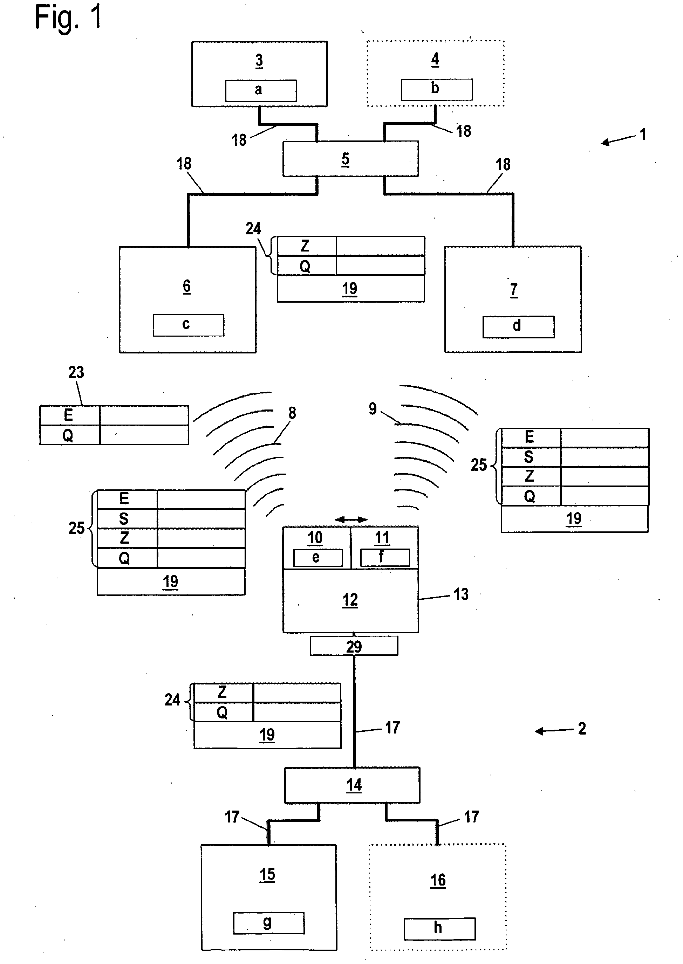

In Fig. 1 sind schematisch ein Netzwerk 1 und eine mobile Datenübertragungseinheit 2 gezeigt. Die mobile Datenübertragungseinheit 2 kann sich beispielsweise in Richtung des Pfeils 26 gegenüber dem Netzwerk 1 bewegen. Das Netzwerk 1 umfasst mehrere Datenverarbeitungseinheiten. Im Ausführungsbeispiel sind die Datenverarbeitungseinheiten als Server 3 und 4 ausgebildet. Es kann eine beliebige Anzahl von Servern 3, 4 vorgesehen sein. Der Server 3 besitzt eine MAC-Adresse a und der Server 4 eine MAC-Adresse b. Die MAC-Adressen a, b sind dabei in dem für MAC-Adressen üblichen Format gehalten. Die Server 3 und 4 sind mit einer Schalteinrichtung, nämlich einem Switch 5 verbunden. Die Verbindung zwischen den Servern 3, 4 und dem Switch 5 besteht über Ethernetverbindungen 18. Anstatt der Ethernetverbindungen 18 können auch andere Datenverbindungen, beispielsweise kabellose Verbindungen wie WLAN-Verbindungen oder dgl. vorgesehen sein. Der Switch 5 ist über weitere Ethernetverbindungen 18 mit Zugriffspunkten 6 und 7 verbunden. Der erste Zugriffspunkt 6 besitzt eine MAC-Adresse c und der zweite Zugriffspunkt 7 besitzt eine MAC-Adresse d. Es kann eine beliebige Anzahl von Zugriffspunkten 6, 7 vorgesehen sein, die mit dem Switch 5 verbunden sind.

Innerhalb des Netzwerks 1 werden Nutzdaten 19 mit einem Adressblock 24 versandt, der für Ethernetverbindungen üblich ist. Der Adressblock 24 besitzt Angaben über das Ziel Z und die Quelle Q der Nutzdaten 19. Die Angaben über Ziel Z und Quelle Q sind den Nutzdaten 19 vorangestellt.

Die mobile Datenübertragungseinheit 2 besitzt eine Datenübertragungseinrichtung 13 zur kabellosen Verbindung mit dem Netzwerk 1. Die Datenübertragungseinrichtung 13 umfasst eine Umschalteinrichtung 12 sowie zwei Module 10 und 11. Das erste Modul 10 besitzt eine MAC-Adresse e und das zweite Modul 11 besitzt eine MAC-Adresse f. Die Module 10 und 11 können kabellose Datenverbindungen 8 und 9 zu den Zugriffspunkten 6 und 7 aufbauen. Die Datenübertragungseinrichtung 13 kann auch mehr als zwei Module besitzen.

Die kabellosen Datenverbindungen 8 und 9 sind vorteilhaft WLAN WDS-Verbindungen, wobei WDS ein kabelloses verteiltes System (Wireless Distribution System) bezeichnet. Über die Datenverbindungen 8 und 9 werden Nutzdaten 19 mit einem Adressblock 25 für WLAN WDS-Verbindungen versehen. Dieser Adressblock enthält neben der Angabe von Quelle Q und Ziel Z der Daten zusätzlich noch die MAC-Adressen des Empfängers E und des Senders S der an der kabellosen Datenverbindung 8, 9 beteiligten Partner, also die MAC-Adressen c, d, e oder f der Zugriffspunkte 6 und 7 bzw. der Module 10 und 11.

Die Datenübertragungseinrichtung 13 ist über einen Treiber 29, insbesondere über einen WLAN-Treiber, mit einem Switch 14 verbunden. Der Treiber 29 ist dabei insbesondere in die Datenübertragungseinrichtung 13 integriert. Die Verbindung zwischen der Datenübertragungseinrichtung 13 und dem Switch 14 ist eine Ethernetverbindung 17. Der Switch 14 ist über weitere Ethernetverbindungen 17 mit Datenverarbeitungseinheiten, nämlich Clients 15 und 16 verbunden. Der Client 15 besitzt eine MAC-Adresse g und der Client 16 eine MAC-Adresse h. Es kann eine beliebige Anzahl von Clients 15, 16 mit dem Switch 14 verbunden sein. Die Datenübertragungseinrichtung 13 kann auch eine größere Anzahl von Modulen 10, 11 zur Herstellung kabelloser Datenverbindungen 8 und 9 aufweisen.

Im Betrieb werden zwischen dem Netzwerk 1 und der mobilen Datenübertragungseinheit 2 Nutzdaten 19 übertragen. Die Datenübertragungseinrichtung 13 ist dabei so ausgelegt, dass die Nutzdaten 19 jeweils nur über ein Modul 10, 11 versendet werden können. Alle weiteren Module 10, 11 sind passiv geschaltet und können nicht zur Übertragung von Nutzdaten 19 genutzt werden. Die Module 10, 11, die sich in einem passiven Zustand befinden, suchen permanent nach weiteren Zugriffspunkten 6, 7 und messen deren Feldstärke. Zu dem Zugriffspunkt 6, 7 mit der besten Feldstärke wird eine Standby-Datenverbindung aufgebaut. Das Herstellen der Standby-Datenverbindung umfasst dabei vorteilhaft die Autorisierung und Anmeldung in dem Netzwerk 1, die Abhandlung der Verschlüsselung und die Einbuchung in das Netzwerk 1. Das Herstellen der Standby-Datenverbindung kann auch nur einige dieser Schritte oder weitere Schritte umfassen. Das Herstellen der Standby-Datenverbindung der Module 10, 11 mit den Zugriffspunkten 6, 7 erfolgt mit den MAC-Adressen e und f der Module 10, 11. Während der Herstellung der Standby-Datenverbindung werden Nutzdaten über das aktive Modul zu dem Netzwerk 1 gesendet oder von dem Netzwerk 1 empfangen. Auch nach der Herstellung einer Standby-Datenverbindung sucht das passive Modul weiter nach weiteren Zugriffspunkten 6, 7, die eine bessere Feldstärke besitzen und baut ggf. zu diesen Zugriffspunkten 6, 7 eine Standby-Datenverbindung auf.

Die Umschalteinrichtung 12 überprüft laufend, ob eine von einem passiven Modul hergestellte Standby-Datenverbindung eine bessere Qualität aufweist, als die momentan aktive Datenverbindung 8, 9. Die Qualität der Datenverbindung kann dabei von unterschiedlichen Faktoren abhängen, beispielsweise von der Feldstärke, der WLAN-Frequenz, der Belegung, also dem Aufkommen von Datenverkehr, auf der WLAN-Zeitscheibe und von Zeitfaktoren. Die tatsächliche Qualität einer kabellosen Datenverbindung 8, 9 kann erst nach dem Einbuchen des Moduls 10, 11 in das Netzwerk 1, also nach dem Herstellen der Standby-Datenverbindung ermittelt werden. Welche Datenverbindung die beste Qualität liefert, kann sich aufgrund der Bewegung der mobilen Datenübertragungseinheit 2 permanent ändern.

Stellt die Umschalteinrichtung 12 fest, dass ein passives Modul eine Standby-Datenverbindung aufgebaut hat, die eine bessere Qualität als die momentan aktive kabellose Datenverbindung 8, 9 besitzt, so schaltet die Umschalteinrichtung 12 zwischen den Modulen 10 und 11 um. Das bisher passive Modul wird in den aktiven Zustand geschaltet und das bisher aktive Modul passiv. Auch alle weiteren Module bleiben im passiven Zustand, so dass Nutzdaten 19 nur noch über das jetzt aktiv geschaltete Modul 10, 11 übertragen werden können. Um sicherzustellen, dass Nutzdaten 19, die von den Servern 3, 4 zu den Clients 15, 16 gesendet werden sollen, nun über das neue aktiv geschaltete Modul und nicht über das bisher aktive, nun passive Modul 10, 11 gesendet werden, sendet ein Modul, das in den aktiven Zustand geschaltet wurde, unmittelbar nach dem Schalten in den aktiven Zustand eine Aktualisierungsmitteilung 23 aus. Die Aktualisierungsmitteilung 23 gibt dieses Modul 10, 11 als Versender bzw. Empfänger von Nutzdaten 19 der Clients 15, 16 aus.

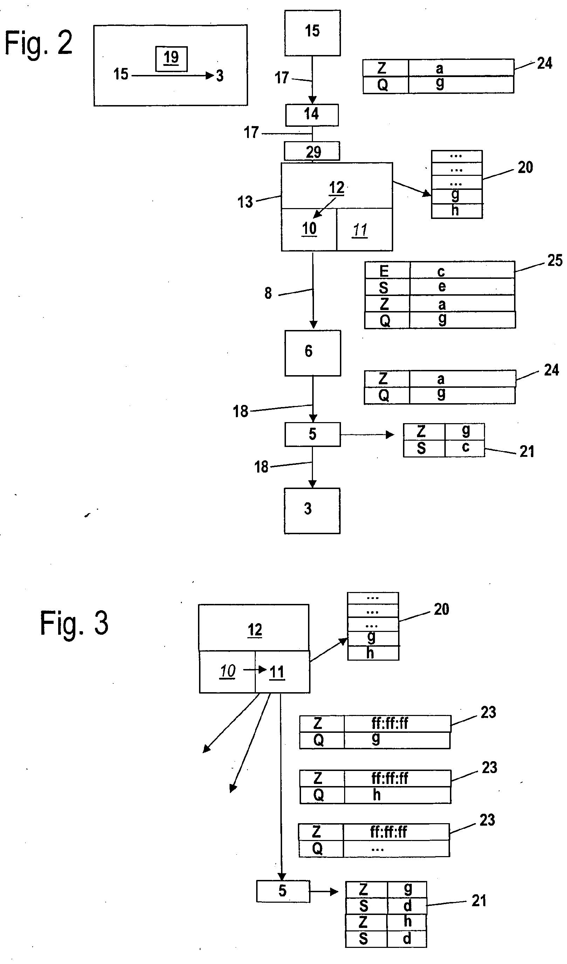

In den Figuren 2 bis 4 ist der Ablauf des Verfahrens zur Datenübertragung zwischen dem Netzwerk 1 und der mobilen Datenübertragungseinheit 2 im Einzelnen gezeigt. Fig. 2 zeigt den Ablauf beim Versenden von Nutzdaten 19 von dem ersten Client 15 zum ersten Server 3. Der erste Client 15 sendet die Nutzdaten zunächst über die Ethernetverbindung 17 an den Switch 14. Dabei wird als Adressblock 24 der Ethernetverbindung 17 als Ziel Z die MAC-Adresse a des ersten Servers 3 angegeben und als Quelle Q die MAC-Adresse g des ersten Clients 15. Über den Switch 14 und den WLAN-Treiber 29 werden die Nutzdaten 19 an die Datenübertragungseinrichtung 13 weitergeleitet. In der Datenübertragungseinheit 13 ist das erste Modul 10 aktiv geschaltet und das zweite Modul 11 passiv. In der Umschalteinrichtung 12 ist eine Tabelle 20 hinterlegt, in der alle aktiven Clients 15, 16 mit ihren MAC-Adressen g, h aufgeführt sind. Beim Erhalt der Nutzdaten 19 aktualisiert die Umschalteinrichtung 12 die Tabelle 20, falls die MAC-Adresse g des Clients 15 noch nicht als aktiver Client eingetragen ist.

Die Daten werden von dem ersten Modul 10 über die kabellose Datenverbindung 8 zu dem ersten Zugriffspunkt 6 gesandt. Dabei werden die Daten mit einem WLAN WDS-Adressblock 25 versehen, in dem zusätzlich die MAC-Adresse c des ersten Zugriffspunkts 6 als Empfänger E und die MAC-Adresse d des ersten Moduls 10 als Sender S eingetragen ist. Der erste Zugriffspunkt 6 sendet die Daten über eine Ethernetverbindung 18 an den Switch 5. Über die Ethernetverbindung 18 werden die Daten mit dem Ethernetadressblock 24 versandt, in dem nur Ziel Z und Quelle Q des Datenpakets angegeben sind. Der Switch 5 leitet die Daten über eine Ethernetverbindung 18 an den ersten Server 3 weiter. Im Switch 5 ist eine Tabelle 21 gespeichert, in der hinterlegt ist, welches Ziel über welche Verbindung zu erreichen ist. Diese Tabelle 21, der so genannte Switch table, wird vom Switch 5 automatisch aktualisiert. Im Switch 5 wird vermerkt, dass Daten, die als Ziel die MAC-Adresse g des ersten Clients 15 aufweisen über den Sender S mit der MAC-Adresse c des ersten Zugriffspunkts 6 zu versenden sind. Der Switch 5 wird demnach Datenpakete für den ersten Client 15 über den ersten Zugriffspunkt 6 und damit auch über das erste Modul 10 leiten.

In Fig. 3 ist der Vorgang des Umschaltens gezeigt. Hat das zweite Modul 11 eine Standby-Datenverbindung aufgebaut, deren Qualität besser als die Qualität der aktiven Datenverbindung 8 ist, so schaltet die Umschalteinrichtung 12 das zweite Modul 11 in den aktiven und das erste Modul 10 in den passiven Zustand. Die Umschalteinrichtung 12 besitzt dabei einen Mikroprozessor und der Umschaltvorgang zwischen den Modulen 10 und 11 erfolgt durch Vertauschen von Zeigern im Befehlscode des Mikroprozessors. Dadurch kann das Umschalten sehr schnell realisiert werden.

Nach dem Umschalten hat das zweite Modul 11, das dann das aktive Modul ist, Zugriff auf die Tabelle 20, in der die MAC-Adressen g, h alle aktiven Clients 15, 16 hinterlegt ist. Unmittelbar nach dem Umschalten sendet das zweite Modul 11 eine Vielzahl von Aktualisierungsmitteilungen 23. In jeder Aktualisierungsmitteilung 23 gibt sich das zweite Modul 11 als Quelle Q eines Clients 15, 16 aus. Die Aktualisierungsmitteilungen 23 werden dabei als so genannte Broadcast-Mitteilungen an alle Empfänger versandt. Um das zweite Modul 11 als Versender von Nutzdaten 19 der Clients 15 und 16 auszugeben, enthalten die Aktualisierungsmitteilungen 23 als Quelle Q jeweils eine MAC-Adresse g, h eines aktiven Clients 15, 16. Die Aktualisierungsmitteilungen 23 enthalten demnach nicht die MAC-Adresse f des aktiven Moduls 11, sondern stattdessen die MAC-Adressen g, h der aktiven Clients 15, 16, deren Nachrichten das zweite Modul 11 versendet und empfängt.

Diese Aktualisierungsmitteilungen 23 werden unter anderem auch von dem Switch 5 empfangen. Daraufhin aktualisiert der Switch 5 in der Tabelle 21 automatisch den Sender von Nachrichten, die als Ziel die MAC-Adressen g, h der Clients 15 und 16 tragen. Diese Nachrichten sollen nun über den zweiten Zugriffspunkt 7 anstatt über den ersten Zugriffspunkt 6 gesendet werden. Als Sender S ist deshalb jeweils die MAC-Adresse d des zweiten Zugriffspunkts 7 eingetragen. Die Aktualisierung des Switch 5 erfolgt aufgrund der Aktualisierungsmitteilungen 23 automatisch. Veränderungen am Netzwerk 1 sind deshalb nicht notwendig. Durch den Versand der Aktualisierungsmitteilungen 23 wird im Netzwerk 1 automatisch auf das nun aktive Modul 11 umgeschaltet.

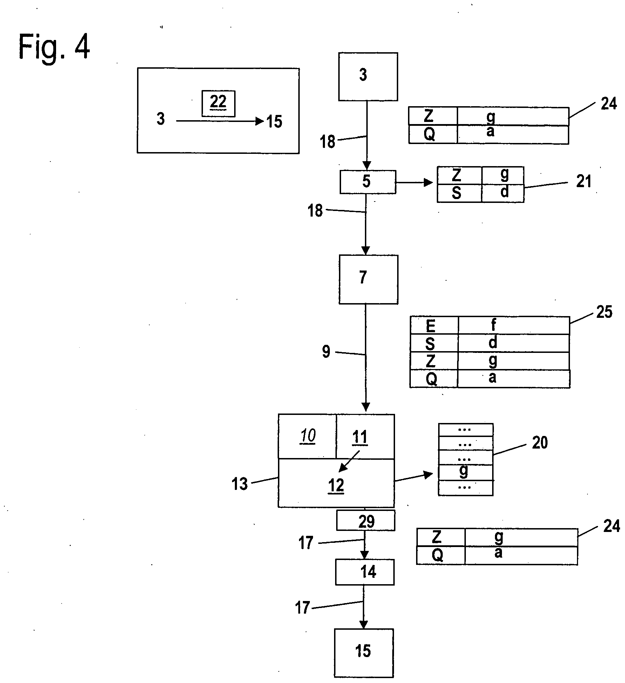

In Fig. 4 ist die Übertragung von Nutzdaten 22 von dem ersten Server 3 zu dem ersten Client 15 nach dem Umschalten auf das zweite Modul 11 gezeigt. Die Nutzdaten 22 werden zunächst von dem ersten Server 3 über eine Ethernetverbindung 18 zu dem Switch 5 übertragen. Die Übertragung erfolgt mit einem Ethernetadressblock 24, der den Nutzdaten 22 vorangestellt ist und der als Ziel Z die MAC-Adresse g des ersten Clients 15 und als Quelle Q die MAC-Adresse a des ersten Servers 3 angibt. In der Tabelle 21 des Switch 5 ist hinterlegt, dass Daten, die als Ziel die MAC-Adresse g des ersten Clients 15 besitzen über den Sender S mit der MAC-Adresse d, also über den zweiten Zugriffspunkt 7 zu versenden sind.

Der Switch 5 sendet die Daten zu dem zweiten Zugriffspunkt 7. Vom zweiten Zugriffspunkt 7 werden die Daten über die zweite kabellose Datenverbindung 9 zur Datenübertragungseinrichtung 13 gesandt. Bei der Übertragung der Daten vom zweiten Zugriffspunkt 7 zur Datenübertragungseinrichtung 13 über die zweite kabellose Datenverbindung 9 ist den Daten ein WLAN WDS-Adressblock 25 vorangestellt, der zusätzlich zu den Ethernetadressblock 24 noch die MAC-Adressen f und d des Empfängers E und des Senders S enthält. Die Daten werden von dem aktiven Modul 11 empfangen. Die Umschalteinrichtung 12 aktualisiert die Tabelle 20 und setzt die MAC-Adresse g des ersten Clients 15 als aktiven Client 15. Die Datenübertragungseinrichtung 13 leitet die Nutzdaten 22 über den Treiber 29 und eine Ethernetverbindung 17 über den Switch 14 weiter zum ersten Client 15.

Dadurch, dass das Umschalten zwischen den Modulen 10, 11 in minimal kurzer Zeit erfolgen kann, beispielsweise im Bereich von Mikrosekunden oder Nanosekunden, ist eine Verzögerung der Datenübertragung zwischen der mobilen Datenübertragungseinheit 2 und dem Netzwerk 1 nicht messbar. Ein Zwischenspeichern von Daten während dem Aufbau einer Datenverbindung zu einem weiteren Zugriffspunkt kann entfallen, da beim Umschalten bereits eine Standby-Datenverbindung zu einem weiteren Zugriffspunkt aufgebaut wurde. Die Aktualisierungsmitteilungen 23 ermöglichen das Umschalten zwischen Modulen, die sowohl Daten senden als auch Daten empfangen, ohne im Netzwerk 1 selbst Informationen über den Umschaltvorgang oder die Module 10 und 11 hinterlegen zu müssen. Dadurch kann die mobile Datenübertragungseinheit 2 mit der Datenübertragungseinrichtung 13 auch bei bestehenden Netzwerken 1 auf einfache Weise eingesetzt werden. Dies wird dadurch ermöglicht, dass die Aktualisierungsmitteilungen 23 als Quelle Q nicht die MAC-Adresse e, f des Moduls 10, 11, sondern die MAC-Adresse g, h eines Clients 15, 16 besitzen.

Im Ausführungsbeispiel besitzt das Netzwerk 1 Server 3, 4 und die mobile Datenübertragungseinheit 2 Clients 15, 16. Es kann jedoch auch eine andere Architektur vorgesehen sein, bei der im Netzwerk 1 Clients und/oder in der mobilen Datenübertragungseinheit 2 Server vorgesehen sind. Es kann auch vorgesehen sein, dass nur gleichberechtigte Datenverarbeitungseinheiten im Netzwerk 1 und in der mobilen Datenübertragungseinheit 2 vorgesehen sind.

## Patentansprüche

1. Verfahren zur Datenübertragung zwischen einem Netzwerk (1) und einer mobilen Datenübertragungseinheit (2),
- wobei das Netzwerk (1) mindestens eine Datenverarbeitungseinheit wie einen Server (3, 4) umfasst,
- und wobei die mobile Datenübertragungseinheit (2) mindestens eine Datenverarbeitungseinheit wie einen Client (15, 16) umfasst,
- wobei das Netzwerk (1) mindestens zwei Zugriffspunkte (6, 7) und die mobile Datenübertragungseinheit (2) mindestens zwei Module (10, 11) zur kabellosen Datenverbindung (8, 9) von Netzwerk (1) und mobiler Datenübertragungseinheit (2) besitzen,
- wobei die mobile Datenübertragungseinheit (2) eine Umschalteinrichtung (12) besitzt, die zwischen mehreren Schaltzuständen umschalten kann,
- wobei in jedem Schaltzustand ein Modul (10) aktiv ist, so dass über dieses aktive Modul (10) Nutzdaten (19, 22) übertragen werden können, und alle anderen Module (11) passiv sind, so dass über diese passiven Module (11) keine Nutzdaten (19, 22) übertragen werden können,
- wobei unmittelbar nach dem Umschalten zwischen zwei Schaltzuständen das in den aktiven Zustand geschaltete aktive Modul (10) mindestens eine Aktualisierungsmitteilung (23) versendet,
- und die Aktualisierungsmitteilung (23) dieses aktive Modul (10) als Versender bzw. Empfänger von Nutzdaten (19, 22) mindestens einer Datenverarbeitungseinheit der mobilen Datenübertragungseinheit (2) wie mindestens eines Clients (15, 16) ausgibt,
- und jede Datenverarbeitungseinheit des Netzwerks (1), jeder Zugriffspunkt (6, 7), jedes aktive und passive Modul (10, 11) und jede Datenverarbeitungseinheit der mobilen Datenübertragungseinheit (2) eine eigene Adresse in Form einer eigenen MAC-Adresse (a, b, c, d, e, f, g, h) besitzt,
**dadurch gekennzeichnet,**
- **dass** die Aktualisierungsmitteilung (23) als Quelle (Q) die MAC-Adresse (g, h) mindestens einer Datenverarbeitungseinheit der mobilen Datenübertragungseinheit (2) anstatt der MAC-Adresse (e, f) des aktiven Moduls (10) enthält,
- wobei die Nutzdaten (19, 22) zwischen den Datenverarbeitungseinheiten der mobilen Datenübertragungseinheit (2) und der Umschalteinrichtung (12) und zwischen den Zugriffspunkten (6, 7) und den Datenverarbeitungseinheiten des Netzwerks (1) jeweils über ein Schaltbauteil (5, 14) übertragen werden, in dem in einer Tabelle (21) gespeichert ist, welches Ziel (Z) über welche kabellose Datenverbindung (8, 9) zu erreichen ist,
- und **dass** die Tabelle (21) des Schaltbauteils (5), das mit den Zugriffspunkten (6, 7) verbunden ist, nach dem Erhalt der Aktualisierungsmitteilung (23) aktualisiert wird.

2. Verfahren nach Anspruch 1,
**dadurch gekennzeichnet, dass** die Aktualisierungsmitteilung (23) als Broadcast-Mitteilung an alle Empfänger versendet wird.

3. Verfahren nach Anspruch 1 oder 2,
**dadurch gekennzeichnet, dass** über das aktive Modul (10) Nutzdaten (19, 22) von allen mit der Umschalteinrichtung (12) verbundenen, aktiven Datenverarbeitungseinheiten versendet werden und Nutzdaten (19, 22) für alle mit der Umschalteinrichtung (12) verbundenen aktiven Datenverarbeitungseinheiten empfangen werden.

4. Verfahren nach Anspruch 1,
**dadurch gekennzeichnet, dass** beim Übertragen von Nutzdaten (19, 22) zwischen den Datenverarbeitungseinheiten der mobilen Datenübertragungseinheit (2) und des aktiven Moduls (10) und beim Übertragen von Nutzdaten (19, 22) zwischen den Datenverarbeitungseinheiten des Netzwerks (1) und den Zugriffspunkten (6, 7) den zu übertragenden Datenpaketen die MAC-Adresse (a, b, g, h) der Quelle (Q) und des Ziels (Z) der Daten vorangestellt werden.

5. Verfahren nach Anspruch 4,
**dadurch gekennzeichnet, dass** die aktiven und passiven Module (10, 11) mit den Zugriffspunkten (6, 7) über eine kabellose Datenverbindung (8, 9) verbunden sind, und dass beim Übertragen von Nutzdaten (19, 22) über diese kabellose Datenverbindung (8, 9) den Datenpaketen zusätzlich zu den MAC-Adressen (a, b, c, d) der Quelle (Q) und des Ziels (Z) der Daten die MAC-Adressen (c, d, e, f) des Moduls (10, 11) und des Zugriffspunkts (6, 7), über die die Daten übertragen werden, als Sender (S) und Empfänger (E) vorangestellt werden.

6. Verfahren nach einem der Ansprüche 1 bis 5,
**dadurch gekennzeichnet, dass** in der Umschalteinrichtung (12) gespeichert ist, welche Datenverarbeitungseinheiten der mobilen Datenübertragungseinheit (2) aktiv sind, und dass nach dem Umschalten das aktiv geschaltete Modul (10) eine Aktualisierungsmitteilung (23) für jede als aktiv gespeicherte Datenverarbeitungseinheit der mobilen Datenübertragungseinheit (2) versendet.

7. Verfahren nach einem der Ansprüche 1 bis 6,
**dadurch gekennzeichnet, dass** das mindestens eine passive Modul (11) während der Verbindung des aktiven Moduls (10) mit einem Zugriffspunkt (6, 7) nach weiteren Zugriffspunkten (6, 7) sucht und eine Standby-Datenverbindung zu einem weiteren Zugriffspunkt (6, 7) herstellt.

8. Verfahren nach Anspruch 7,
**dadurch gekennzeichnet, dass** das passive Modul (11) eine Standby-Datenverbindung zu dem Zugriffspunkt (6, 7) herstellt, der die beste Signalstärke liefert.

9. Verfahren nach Anspruch 7 oder 8,
**dadurch gekennzeichnet, dass** das passive Modul (11) die Standby-Datenverbindung zu dem Zugriffspunkt (6, 7) unter seiner eigenen MAC-Adresse (e, f) herstellt.

10. Verfahren nach einem der Ansprüche 7 bis 9,
**dadurch gekennzeichnet, dass** nach der Herstellung der Standby-Datenverbindung die Qualität dieser Verbindung geprüft und mit der Qualität der aktiven kabellosen Datenverbindung (8, 9) verglichen wird.

11. Verfahren nach Anspruch 10,
**dadurch gekennzeichnet, dass** die Umschalteinrichtung (12) zwischen dem passiven Modul (11), das die Standby-Datenverbindung zu einem weiteren Zugriffspunkt (6, 7) hergestellt hat, und dem aktiven Modul (10) umschaltet, wenn die Qualität der Standby-Datenverbindung besser als die Qualität der aktiven kabellosen Datenverbindung (8, 9) ist, so dass das bisher aktive Modul (10) passiv geschaltet wird und das bisher passive Modul (11) aktiv.

12. Verfahren nach einem der Ansprüche 1 bis 11,
**dadurch gekennzeichnet, dass** alle aktiven und passiven Module (10, 11) über die gleiche kabellose Verbindungstechnologie eine kabellose Datenverbindung (8, 9) zu den Zugriffspunkten (6, 7) herstellen.

13. Verfahren nach Anspruch 12,
**dadurch gekennzeichnet, dass** die aktiven und passiven Module (10, 11) WLAN-Module, genannt "Wireless Local Area Network-Module", sind, die mit den Zugriffspunkten (6, 7) über ein kabelloses verteiltes System, genannt "Wireless Distribution System - WDS", verbunden sind.

14. Verfahren nach einem der Ansprüche 1 bis 13,
**dadurch gekennzeichnet, dass** die Umschalteinrichtung (12) mit den Datenverarbeitungseinheiten der mobilen Datenübertragungseinheit (2) über Ethernetverbindungen (17) verbunden ist.

## Claims

1. Method for data transmission between a network (1) and a mobile data transmission unit (2),
- the network (1) comprising at least one data processing unit such as a server (3, 4),
- and the mobile data transmission unit (2) comprising at least one data processing unit such as a client (15, 16),
- the network (1) having at least two access points (6, 7) and the mobile data transmission unit (2) having at least two modules (10, 11) for wireless data link (8, 9) of the network (1) and the mobile data transmission unit (2),
- the mobile data transmission unit (2) having a switching device (12) that can switch between a plurality of switching states,
- one module (10) being active in each switching state, such that payload data (19, 22) can be transmitted by means of said active module (10), and all the other modules (11) being passive, such that no payload data (19, 22) can be transmitted by means of said passive modules (11),
- the active module (10) switched into the active state transmitting at least one update message (23) immediately after the switching between two switching states,
- and the update message (23) outputting said active module (10) as the sender or recipient of payload data (19, 22) of at least one data processing unit of the mobile data transmission unit (2) as at least one client (15, 16),
- and each data processing unit of the network (1), each access point (6, 7), each active and passive module (10, 11) and each data processing unit of the mobile data transmission unit (2) having its own address in the form of its own MAC address (a, b, c, d, e, f, g, h),
**characterised in that**
- as the source (Q), the update message (23) contains the MAC address (g, h) of at least one data processing unit of the mobile data transmission unit (2) instead of the MAC address (e, f) of the active module (10),
- the payload data (19, 22) being transmitted between the data processing units of the mobile data transmission unit (2) and the switching device (12), and between the access points (6, 7) and the data processing units of the network (1) in each case via a switching component (5, 14), in which a table (21) stores which the destination (Z) is to be reached via which wireless data link (8, 9),
- and **in that** the table (21) of the switching component (5) connected to the access points (6, 7) is updated after receipt of the update message (23).

2. Method according to claim 1,
**characterised in that** the update message (23) is sent to all recipients as a broadcast message.

3. Method according to either claim 1 or claim 2,
**characterised in that,** by means of the active module (10), payload data (19, 22) are transmitted from all the active data processing units connected to the switching device (12), and payload data (19, 22) are received for all the active data processing units connected to the switching device (12).

4. Method according to claim 1,
**characterised in that,** when payload data (19, 22) are transmitted between the data processing units of the mobile data transmission unit (2) and of the active module (10), and when payload data (19, 22) are transmitted between the data processing units of the network (1) and the access points (6, 7), the MAC address (a, b, g, h) of the source (Q) and destination (Z) of the data are prefixed to the data packets to be transmitted.

5. Method according to claim 4,
**characterised in that** the active and passive modules (10, 11) are connected to the access points (6, 7) via a wireless data link (8, 9), and **in that**, when payload data (19, 22) are transmitted via said wireless data link (8, 9), the MAC addresses (c, d, e, f) of the module (10, 11) and access point (6, 7) via which the data are transmitted are also prefixed to the data packets as the sender (S) and recipient (E), in addition to the MAC addresses (a, b, c, d) of the source (Q) and destination (Z) of the data.

6. Method according to any of claims 1 to 5,
**characterised in that** the switching device (12) stores which data processing units of the mobile data transmission unit (2) are active, and **in that**, after the switching, the module (10) switched to active sends an update message (23) for each data processing unit, stored as being active, of the mobile data transmission unit (2).

7. Method according to any of claims 1 to 6,
**characterised in that** the at least one passive module (11) searches for additional access points (6, 7) while the active module (10) is connected to an access point (6, 7), and establishes a standby link to an additional access point (6, 7).

8. Method according to claim 7,
**characterised in that** the passive module (11) establishes a standby data link to the access point (6, 7) that provides the best signal strength.

9. Method according to either claim 7 or claim 8,
**characterised in that** the passive module (11) establishes the standby data link to the access point (6, 7) under its own MAC address (e, f).

10. Method according to any of claims 7 to 9,
**characterised in that,** once the standby data link has been established, the quality of this link is checked and compared with the quality of the active wireless data link (8, 9).

11. Method according to claim 10,
**characterised in that** the switching device (12) switches between the passive module (11) that has established the standby data link to an additional access point (6, 7), and the active module (10) when the quality of the standby data link is better than the quality of the active wireless data link (8, 9), such that the previously active module (10) is switched to passive and the previously passive module (11) is switched to active.

12. Method according to any of claims 1 to 11,
**characterised in that** all active and passive modules (10, 11) establish a wireless data link (8, 9) to the access points (6, 7) by means of the same wireless connection technology.

13. Method according to claim 12,
**characterised in that** the active and passive modules (10, 11) are WLAN (Wireless Local Area Network) modules that are connected to the access points (6, 7) via a Wireless Distribution System (WDS).

14. Method according to any of claims 1 to 13,
**characterised in that** the switching device (12) is connected to the data processing units of the mobile data transmission unit (2) via Ethernet connections (17).

## Revendications

1. Procédé de transmission de données entre un réseau (1) et une unité de transmission de données mobile (2),
- dans lequel le réseau (1) comprend au moins une unité de traitement de données telle qu'un serveur (3, 4),
- et dans lequel l'unité de transmission de données mobile (2) comprend au moins une unité de traitement de données telle qu'un client (15, 16),
- dans lequel le réseau (1) possède au moins deux points d'accès (6, 7) et l'unité de transmission de données mobile (2) au moins deux modules (10, 11) pour de liaison de données sans fil (8, 9) entre le réseau (1) et l'unité de transmission de données mobile (2),
- dans lequel l'unité de transmission de données mobile (2) possède un dispositif de commutation (12) qui peut commuter entre plusieurs états de commutation,
- dans lequel, dans chaque état de commutation, un module (10) est actif de sorte que des données utiles (19, 22) peuvent être transmises via ce module actif (10), et tous les autres modules (11) sont passifs, de sorte qu'aucune donnée utile (19, 22) ne peut être transmise via ces modules passifs (11),
- dans lequel, immédiatement après la commutation entre deux états de commutation, le module actif (10) commuté à l'état actif envoie au moins un message d'actualisation (23),
- et délivre le message d'actualisation (23) de ce module actif (10) en tant qu'expéditeur ou destinataire de données utiles (19, 22) à au moins une unité de traitement de données de l'unité de transmission de données mobile (2) telle qu'au moins un client (15, 16),
- et chaque unité de traitement de données du réseau (1), chaque point d'accès (6, 7), chaque module actif et passif (10, 11) et chaque unité de traitement de données de l'unité de transmission de données mobile (2) possède sa propre adresse sous la forme d'une adresse MAC (a, b, c, d, e, f, g, h) propre,
**caractérisé en ce**
- **que** le message d'actualisation (23) contient comme source (Q) l'adresse MAC (g, h) d'au moins une unité de traitement de données de l'unité de transmission de données mobile (2) au lieu de l'adresse MAC (e, f) du module actif (10),
- les données utiles (19, 22) étant transmises entre les unités de traitement de données de l'unité de transmission de données mobile (2) et le dispositif de commutation (12) et entre les points d'accès (6, 7) et les unités de traitement de données du réseau (1) via un composant de commutation (5, 14) respectif dans lequel il est enregistré dans un tableau (21) quelle cible (Z) peut être atteinte via quelle liaison de données sans fil (8, 9),
- et **que** le tableau (21) du composant de commutation (5) qui est relié aux points d'accès (6, 7) est actualisé après réception du message d'actualisation (23).

2. Procédé selon la revendication 1,
**caractérisé en ce que** le message d'actualisation (23) est envoyé à tous les destinataires sous forme de message de diffusion.

3. Procédé selon la revendication 1 ou 2,
**caractérisé en ce que** des données utiles (19, 22) de toutes les unités de traitement de données actives reliées au dispositif de commutation (12) sont envoyées et des données utiles (19, 22) pour toutes les unités de traitement de données actives reliées au dispositif de commutation (12) sont reçues via le module actif (10).

4. Procédé selon la revendication 1,
**caractérisé en ce que**, lorsque des données utiles (19, 22) sont transmises entre les unités de traitement de données de l'unité de transmission de données mobile (2) et le module actif (10) et lorsque des données utiles (19, 22) sont transmises entre les unités de traitement de données du réseau (1) et les points d'accès (6, 7), l'adresse MAC (a, b, g, h) de la source (Q) et de la cible (Z) des données est placée en tête des paquets de données à transmettre.

5. Procédé selon la revendication 4,
**caractérisé en ce que** les modules actifs et passifs (10, 11) sont reliés aux points d'accès (6, 7) par une liaison de données sans fil (8, 9) et que, lorsque des données utiles (19, 22) sont transmises via cette liaison de données sans fil (8, 9), les adresses MAC (c, d, e, f) du module (10, 11) et du point d'accès (6, 7) via lesquels les données sont transmises sont placées en tête des paquets de données, en tant qu'expéditeur (S) et destinataire (E), en plus des adresses MAC (a, b, c, d) de la source (Q) et de la cible (Z) des données.

6. Procédé selon l'une des revendications 1 à 5,
**caractérisé en ce qu'**il est enregistré dans le dispositif de commutation (12) quelles unités de traitement de données de l'unité de transmission de données mobile (2) sont actives et que, après la commutation, le module commuté à l'état actif (10) envoie un message d'actualisation (23) pour chaque unité de traitement de données de l'unité de transmission de données mobile (2) enregistrée comme active.

7. Procédé selon l'une des revendications 1 à 6,
**caractérisé en ce que**, pendant la liaison du module actif (10) avec un point d'accès (6, 7), ledit au moins un module passif (11) recherche d'autres points d'accès (6, 7) et établit une liaison de données en attente avec un autre point d'accès (6, 7).

8. Procédé selon la revendication 7,
**caractérisé en ce que** le module passif (11) établit une liaison de données en attente avec le point d'accès (6, 7) qui fournit la meilleure intensité de signal.

9. Procédé selon la revendication 7 ou 8,
**caractérisé en ce que** le module passif (11) établit la liaison de données en attente avec le point d'accès (6, 7) sous sa propre adresse MAC (e, f).

10. Procédé selon l'une des revendications 7 à 9,
**caractérisé en ce que**, après l'établissement de la liaison de données en attente, la qualité de cette liaison est contrôlée et comparée avec la qualité de la liaison de données sans fil active (8, 9).

11. Procédé selon la revendication 10,
**caractérisé en ce que** le moyen de commutation (12) commute entre le module passif (11) qui a établi la liaison de données en attente avec un autre point d'accès (6, 7) et le module actif (10) lorsque la qualité de la liaison de données en attente est meilleure que la qualité de la liaison sans fil active (8, 9), de sorte que le module précédemment actif (10) est commuté à l'état passif et le module précédemment passif (11) à l'état actif.

12. Procédé selon l'une des revendications 1 à 11,
**caractérisé en ce que** tous les modules actifs et passifs (10, 11) établissent une liaison de données sans fil (8, 9) avec les points d'accès (6, 7) par la même technologie de liaison sans fil.

13. Procédé selon la revendication 12,
**caractérisé en ce que** les modules actifs et passifs (10, 11) sont des modules WLAN, appelés modules « Wireless Local Area Network », qui sont reliés aux points d'accès (6, 7) via un système distribué sans fil, appelé « Wireless Distribution System - WDS ».

14. Procédé selon l'une des revendications 1 à 13,
**caractérisé en ce que** le dispositif de commutation (12) est relié aux unités de traitement de données de l'unité de transmission de données mobile (2) via des liaisons Ethernet (17).
